# FASCICULE DE BREVET EUROPEEN

(11) **EP 0 696 720 B1**
(45) Date de publication et mention de la délivrance du brevet: **13.10.1999**
(21) Numéro de dépôt: 95410082.2
(22) Date de dépôt: 08.08.1995
(51) Int. Cl.: G01C 17/18, G01D 11/02

(54) **Capteur pendulaire à rotation illimitée selon son axe de roulis**
Pendelartiger Sensor mit unbeschränkter Drehbewegung um die Rollachse
Pendular sensor having unlimited rotation about its roll axis

(30) Priorité: 11.08.1994 FR 9410091
(43) Date de publication de la demande: 14.02.1996
(73) Titulaire: SEXTANT Avionique, 92366 Meudon la Forêt Cedex (FR)
(72) Inventeur: Odermath, Jean-Marie, F-26800 Beauvallon (FR)
(74) Mandataire: de Beaumont, Michel

(56) Documents cités:
- GB-A- 2 042 724
- US-A- 5 201 128
- ULTRASONICS, vol. 12, no. 5, Septembre 1974 pages 189-190, S.O. HARROLD 'Award-winning designs use ultrasonic bearings'

## Description

La présente invention concerne le domaine des capteurs de grandeur physique orientée, et notamment celui des capteurs de champ magnétique.

La présente invention concerne plus particulièrement les capteurs pendulaires, c'est-à-dire des capteurs comprenant, un système pendulaire sur lequel est disposé au moins un détecteur, une carte électronique, et des fils électriques pour connecter le détecteur à la carte électronique.

Le rôle du système pendulaire est d'orienter le détecteur de la grandeur physique. Plus exactement, un système pendulaire à deux degrés de liberté (un axe de roulis et un axe de tangage) permet de maintenir le détecteur dans un plan horizontal constant. Un système pendulaire à un seul degré de liberté (un axe de roulis uniquement) permet de l'orienter dans une direction constante, relativement au capteur.

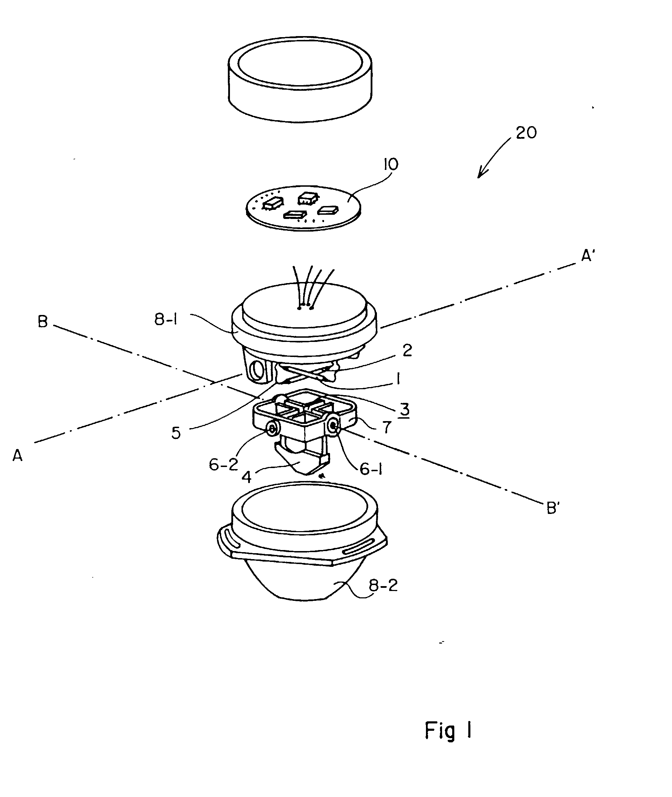

L'inconvénient principal de ces capteurs provient de la présence des fils électriques, qui sont pourtant indispensables pour réaliser de façon simple une connexion entre le détecteur, qui est mobile, et la carte électronique du capteur, qui est fixe et ne peut être montée sur le système pendulaire. En effet, ces fils électriques entravent la mécanique pendulaire et limitent les performances des capteurs, comme cela sera mieux compris au moyen de l'exemple illustré par la figure 1.

La figure 1 représente une vue éclatée d'un magnétomètre pendulaire 20 classique à deux degrés de liberté, permettant de détecter les deux composantes horizontales du champ magnétique terrestre. Les utilisations possibles de ce détecteur sont la détermination d'un cap, d'une orientation, ou tout simplement la mesure d'un champ magnétique local. Par exemple, ce magnétomètre est utilisé dans le domaine de la recherche pétrolière sous-marine, où l'on détecte la présence de nappes prétrolifères en mesurant les échos d'une explosion. La mesure se fait au moyen d'hydrophones accrochés à un câble sous-marin remorqué par un navire. Comme on a besoin de connaître avec une grande précision l'orientation des hydrophones, et que le câble est susceptible de se tordre, de se vriller..., on répartit sur le câble, à intervalles réguliers, plusieurs magnétomètres de ce type.

Le magnétomètre 20 est équipé de deux détecteurs de champ magnétique 1, 2, disposés perpendiculairement, chaque détecteur étant affecté à la mesure de l'une des deux composantes horizontales du champ magnétique terrestre. Les détecteurs 1, 2 sont montés sur un support pendulaire 3 doublement articulé grâce à un système à la Cardan, et maintenu horizontal par une masse de rappel 4. Le support 3 est solidaire d'un premier axe 6-1 guidé en rotation par des paliers à roulements (à billes, à aiguilles ou autres...) portés par un cadre 7. Le cadre 7 est lui-même solidaire d'un deuxième axe 6-2 guidé par des paliers à roulements portés par le châssis 8-1 du capteur. Par la suite, on appellera par convention axe de roulis l'axe porté par le châssis 8 du capteur, ici l'axe 6-2, et axe de tangage l'axe intermédiaire 6-1 porté par le cadre 7, les deux axes étant orientés selon des directions AA' et BB' perpendiculaires. Le capteur est enfermé dans un boîtier étanche 8 rempli d'une huile amortissante et lubrifiante. Le châssis 8-1 forme la partie supérieure du boîtier 8 dont la partie inférieure est une pièce 8-2 en forme de bol, recevant l'ensemble du dispositif pendulaire. Les deux détecteurs 1, 2 sont reliés à une carte électronique 10 externe fixée sur le dessus du châssis 8-1, au moyen de fils conducteurs 5 traversant le châssis de manière étanche. A l'intérieur du boîtier, les fils doivent présenter une longueur suffisante pour ne pas empêcher le support 3 d'atteindre la position horizontale quand le boîtier est incliné. Par ailleurs, pour obtenir une très bonne précision dans le positionnement horizontal, il est préférable que les fils 5 présentent une rigidité et une masse aussi faibles que possible. Ainsi, il est habituel d'utiliser des fils très fins à fibres de cuivre tressées, guipés dans une fibre synthétique de polyester.

Toutefois, ces précautions ne permettent pas de pallier à l'inconvénient principal de ce dispositif, qui est que le débattement angulaire du support pendulaire 3, relativement au boîtier, est fortement limité par la présence des fils. En théorie, l'inclinaison maximale envisageable du capteur selon l'axe de roulis est de ± 180° par rapport à la position verticale. En pratique, les valeurs d'inclinaison maximale sont bien inférieures, car on sait que cela provoquerait, à la longue, une usure excessive des fils et diminuerait la fiabilité du capteur. C'est pourquoi le capteur 20 représenté en figure 1 est conçu de manière que la masse pendulaire 4 vienne buter contre le bol 8-2 en cas de forte inclinaison du capteur, ce qui correspond à une rotation maximum en tangage de 120° (soit ± 60°). Pour la même raison, le cadre 7 vient buter contre le châssis 8-1, ce qui correspond à une rotation maximum en roulis également de 120°.

Dans de nombreuses applications, la limitation en tangage peut être tolérée, mais la limitation en roulis représente une contrainte embarrassante. Par exemple, dans le cas de l'application précédemment évoquée, on souhaite un capteur qui ait une possibilité de rotation illimitée selon l'axe de roulis, car le câble qui porte des magnétomètres peut se vriller et les capteurs effectuer plusieurs rotations complètes. On voit que le capteur classique n'est pas adapté à de telles conditions de fonctionnement, puisque le système pendulaire peut se retrouver en butée et ne plus pouvoir atteindre la position horizontale. Dans d'autres applications, une possibilité de rotation supérieure à 120° serait préférable, qu'elle soit illimitée ou non.

Ainsi, un objectif général de la présente invention est d'améliorer les possibilités en rotation, selon l'axe de roulis, des capteurs pendulaires. Un objectif particulier de la présente invention est de prévoir un capteur à rotation illimitée selon son axe de roulis.

Pour résoudre ce problème, une solution que l'homme du métier pourrait envisager serait de monter sur l'axe de roulis un collecteur tournant, comme on en trouve dans certains moteurs électriques, et de venir prendre l'information électrique au moyens de balais frotteurs. Toutefois, cette solution n'est satisfaisante car le frottement des balais contre les bagues métalliques du collecteur créerait un couple résistant au moins cent fois supérieur au couple des paliers à roulement. Il en résulterait une erreur de positionnement à l'horizontale inadmissible pour un capteur de grande précision.

Un autre objet de la présente invention est de prévoir un capteur pendulaire comprenant un collecteur tournant, mais dont la précision d'horizontalité n'est pas affectée par le frottement de balais contre des bagues du collecteur tournant.

Pour atteindre ces objectifs, la présente invention prévoit un capteur comprenant un premier système pendulaire articulé selon un premier axe, portant au moins un dédecteur, un deuxième système pendulaire articulé selon un deuxième axe colinéaire au premier axe, des bagues métalliques de collecteur étant montées autour du deuxième axe, et des fils électriques connectant des bornes du détecteur aux bagues.

Selon un mode de réalisation, les premier et deuxième axes sont liés en rotation par un système de couplage mécanique présentant un jeu angulaire prédéterminé, le jeu angulaire étant choisi de telle sorte que le premier système pendulaire est, au voisinage de sa position de repos, indépendant du deuxième système pendulaire.

Selon un mode de réalisation, le système de couplage comprend une pièce en forme de fourchette, fixée sur un prolongement du premier axe, un doigt solidaire du deuxième axe, logé entre des branches de la fourchette et d'épaisseur sensiblement inférieure à la distance entre les branches.

Selon un mode de réalisation, le capteur est monté dans un boîtier comprenant une première cavité étanche, remplie d'un fluide visqueux, dans laquelle se trouve le premier système pendulaire, une deuxième cavité étanche, communiquant avec la première cavité, dans laquelle débouche le prolongement du premier axe, et où se trouve le système de couplage, une troisième cavité dans laquelle débouche, par l'intermédiaire d'un joint d'étanchéité, le deuxième axe, et où se trouve une carte électronique connectée à des balais frottant contre les bagues métalliques.

Selon un mode de réalisation, les premier et deuxième axes sont creux et traversés axialement par les fils électriques.

Selon un mode de réalisation, le premier système pendulaire comprend un cadre solidaire du premier axe, et un support pour le détecteur, solidaire d'un autre axe porté par le cadre perpendiculairement au premier axe.

Ces objets, caractéristiques et avantages ainsi que d'autres de la présente invention apparaîtront plus clairement à la lecture de la description suivante, faite à titre non limitatif, d'un mode de réalisation particulier d'un capteur de champ magnétique selon l'invention, en relation avec les figures jointes parmi lesquelles :
- la figure 1 représente un magnétomètre pendulaire classique et a été décrite précédemment,
- la figure 2 est une vue éclatée de la partie mécanique d'un capteur pendulaire selon la présente invention,
- la figure 3 représente une partie du capteur de la figure 2,
- la figure 4 est une vue en coupe représentant le capteur de la figure 2 monté dans un boîtier.

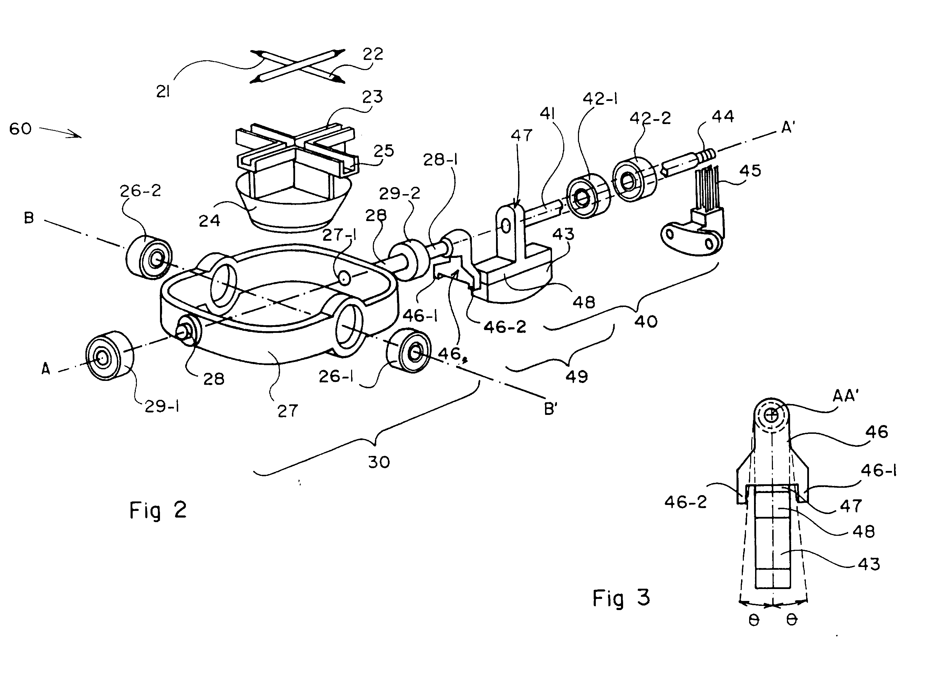

La figure 2 représente par une vue éclatée la partie mécanique d'un capteur pendulaire 60 selon la présente invention. Le capteur 60 est un magnétomètre pendulaire à deux degrés de liberté et comprend, comme le capteur classique représenté en figure 1, deux détecteurs de champ magnétique 21, 22 disposés perpendiculairement l'un par rapport à l'autre sur un support pendulaire 23, maintenu horizontal grâce à une masse de rappel 24. Le support 23 est solidaire d'un axe de tangage 25 d'orientation BB' guidé en rotation, à ses extrémités, par deux paliers à roulements 26-1 et 26-2 portés par un cadre 27. Le cadre 27 est lui-même solidaire d'un axe de roulis 28 d'orientation AA' perpendiculaire à BB', guidé à ses extrémités par deux paliers à roulements 29-1, 29-2 portés par le châssis du capteur, qui n'est pas représenté en figure 2. L'ensemble qui vient d'être décrit forme un système pendulaire de détection 30 de type classique.

Selon une première caractéristique de l'invention, le capteur 60 comprend en outre un deuxième système pendulaire 40, articulé grâce à un axe 41 disposé selon AA' dans le prolongement axial de l'axe de roulis 28. L'axe 41 est porté dans sa partie centrale par deux paliers à roulement 42-1, 42-2, disposés côte à côte. A une extrémité de l'axe 41, en regard de l'axe de roulis 28, le système pendulaire 40 comprend une masse de rappel 43, suspendue de façon rigide à l'axe 41. Etant donné le contrepoids que représente la masse de rappel 43, le système 40 se trouve sensiblement en porte-à-faux et il est prévu un certain espacement entre les deux paliers 42-1, 42-2, afin d'éviter des efforts trop importants le long de l'axe 41. A son autre extrémité, l'axe 41 comporte des bagues métalliques 44 coopérant avec un ensemble de balais frotteurs 45 fixes et solidaires du châssis du capteur.

Ce deuxième système 40 forme un collecteur pendulaire qui présente l'avantage d'être autonome vis-à-vis du système pendulaire 30. On peut déjà, grâce à cette première caractéristique de l'invention, réaliser un capteur pendulaire présentant une possibilité de rotation étendue. Il suffit de relier les détecteurs 21, 22 aux bagues 44 du collecteur pendulaire 40 au moyens de fils électriques, et de connecter les balais 45 à une carte électronique. Quand le capteur va basculer, le collecteur 40 va occuper une position angulaire qui est l'image de la position angulaire du système de détection 30, de sorte que les fils ne subiront aucune torsion. En outre le frottement des balais 45 sur les bagues 44 du collecteur 40 sera sans effet sur le système pendulaire 30, puisque les deux systèmes sont indépendants. Toutefois, comme il ne peut pas exister de moyens immatériels permettant de maintenir les divers paliers 29-2, 42-1, 42-2, les fils vont tôt ou tard, lors de rotations importantes, se heurter à des éléments qui portent les paliers.

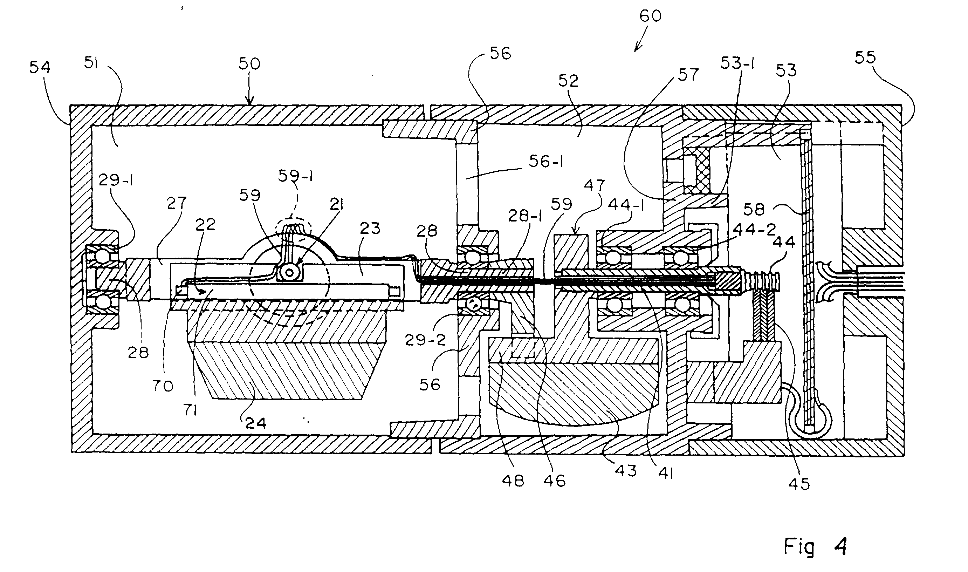

Ainsi, selon une deuxième caractéristique optionnelle de l'invention, les axes 28 et 41 sont creux, et le cadre 27 comporte un orifice 27-1 permettant d'accéder à l'intérieur de l'axe 28. Il est donc possible de faire passer des fils dans l'axe 28, puis dans l'axe 41, jusqu'à atteindre les bagues conductrices 44. En combinaison avec la première caractéristique de l'invention, une telle disposition permet de réaliser un capteur à rotation illimitée selon l'axe de roulis. Cet avantage apparaîtra plus clairement lors de la description de la figure 4.

Selon une troisième caractéristique optionnelle de l'invention, qu'il est conseillé de prévoir si le capteur risque d'être soumis à des rotations brutales, une extrémité 28-1 de l'axe de roulis 28 du système pendulaire 30 se prolonge sensiblement au-delà du palier 29-2, en direction de l'axe 41 du collecteur 40. Une pièce en forme de fourchette 46, comportant deux branches 46-1 et 46-2 orientées vers le bas, est fixée solidairement à l'extrémité 28-1. Par ailleurs, la masse de rappel 43 du collecteur 40 est accrochée à l'axe 41 par l'intermédiaire d'une pièce 47 en forme de T renversé orienté axialement, une branche du T formant un doigt 48 venant se loger dans la fourchette 46.

Ainsi, la pièce 47 en T et la fourchette 46 forment un système 49 de couplage mécanique du collecteur tournant 40 au système pendulaire 30. L'épaisseur du doigt 48 étant sensiblement inférieure à la distance séparant les branches 46-1 et 46-2, il subsiste un jeu qui confère à chacun des dispositifs pendulaires 30 et 40 une liberté angulaire *O* autour de leurs positions d'équilibre. Cela est illustré par la figure 3, qui représente par un vue axiale selon AA' la fourchette 46, la pièce 47 en T, ainsi que l'angle *O*.

On voit que si le capteur bascule brutalement selon AA', celui des deux systèmes pendulaires 30, 40 qui va pivoter le premier va entraîner l'autre. Par contre, lorsque après le basculement les systèmes se rapprochent ou atteignent leurs positions de repos respectives, ils redeviennent indépendants. De cette manière, le frottement des balais 45 sur les bagues 44, qui fausse inévitablement la position de repos du collecteur 40, reste sans effet sur la position de repos du système de détection 30. Bien entendu, l'homme du métier devra choisir, en fonction de l'intensité des forces de frottement agissant sur l'axe 41, une masse de rappel 43 qui soit suffisante pour que la position de repos du collecteur pendulaire présente, par rapport à la position de repos du système pendulaire 30, un écart angulaire inférieur à l'angle *O*. Sinon, les deux systèmes resteront couplés mécaniquement au repos.

En outre, l'homme du métier pourra réaliser de diverses autres manières le système de couplage 49, par exemple au moyen d'un engrenage comprenant deux pignons dentés solidaires chacun d'une extrémité d'un axe, et une roue dentée de liaison engrenant avec du jeu les deux pignons. Mais l'intérêt du mode de réalisation proposé est que la pièce 47 sert à la fois au couplage angulaire, grâce au doigt 48, et à la fixation de la masse 43, d'où un gain en encombrement du système.

La figure 4 représente par une vue en coupe selon AA' l'intégralité du capteur 60. La partie mécanique représenté en figure 2 est montée dans un boîtier 50 de forme cylindrique comprenant trois cavités cylindriques 51, 52 et 53 délimitées par les flasques avant 54 et arrière 55 du boîtier, et deux cloisons internes 56, 57. Le système pendulaire de détection 30 est monté dans la cavité 51 entre le flasque 54 et la cloison 56, qui portent les paliers 29-1, 29-2 de l'axe de roulis. Le prolongement 28-1 de l'axe de roulis traverse la cloison 56 et débouche dans la cavité 52, où se trouve le système de couplage mécanique 49 et la masse 43 du collecteur pendulaire 40. Les deux paliers 42-1, 42-2 du collecteur sont portés par la cloison 57, qui sépare les cavités 52 et 53. Les cavités 51 et 52 communiquent par des trous 56-1 de la cloison 56, et sont emplies d'un liquide visqueux comme de l'huile silicone, assurant l'amortissement et la lubrification du système. L'axe 41 du collecteur traverse la cloison 57 et débouche dans la cavité 53 par l'intermédiaire d'un joint d'étanchéité 53-1 comportant un orifice à lèvres venant frotter à la périphérie de l'axe 41. Notons que l'extrémité de l'axe 41 doit être bouchée si l'on ne veut pas que l'huile présente dans les cavités 51 et 52 pénètre dans la cavité 53. Dans la cavité 53, on trouve les bagues 44 du collecteur, les balais 45 et une carte électronique 58.

La carte 58 est reliée électriquement aux détecteurs 21, 22 (qui sont dans la cavité 51) par l'intermédiaire des balais 45, des bagues 44, et de fils électriques 59. Les fils 59 sont soudés aux bagues à l'intérieur de l'axe 41, et traversent axialement les axes 41 et 28, pour déboucher dans la cavité 51. Dans la cavité 51, ils parcourent les bords du cadre 27, puis, dans une zone 59-1 située au dessus de l'un des paliers de tangage 26-1, 26-2, quittent le cadre pour atteindre le support 23, jusqu'à être connectés aux détecteurs.

Comme on peut s'en rendre compte en observant la figure 4, le capteur selon l'invention n'est pas limité en inclinaison selon l'axe de roulis. Quelle que soit la position angulaire du boîtier 50, le système pendulaire de détection 30 et le collecteur 40 trouvent leurs positions de repos respectives, à l'horizontale, et les fils ne subissent pratiquement aucune torsion. On remarquera que l'erreur de positionnement du collecteur, due au frottement des balais, est négligeable en ce qui concerne la torsion qu'elle peut introduire sur les fils. En pratique, on obtient une précision de positionnement à l'horizontal de l'ordre de 0.15° pour le système de détection 30, ce qui est une excellente valeur, et une précision de positionnement du collecteur 40 de l'ordre de 2°, valeur qui ne serait pas acceptable s'il s'agissait de la précision du système de détection.

Par ailleurs, on rappelle que le système de couplage angulaire 49 n'est réellement indispensable que si le capteur est destiné à des applications où il risque de subir des rotations brutales selon l'axe de roulis. Dans ce cas, comme le système pendulaire 30 et le collecteur 40 n'ont pas le même temps de réaction, le couplage angulaire permet d'éviter une torsion temporaire des fils électriques. En pratique, le degré de liberté angulaire, défini par le jeu du doigt 48 dans la fourchette 46, pourra être choisi dans une gamme de valeurs préférentielles allant de 5 à 10°.

Selon une exécution du présent mode de réalisation du capteur selon l'invention, le boîtier 50 présente une longueur d'environ 10 cm et un diamètre de 5 cm. L'ensemble des pièces mobiles comme les axes, le cadre, la fourchette, etc. est réalisé en matière plastique moulée. Les masses de rappel sont en acier haute densité, et le boîtier est en aluminium ou en plastique moulé. Enfin, les paliers à roulement sont réalisés avec matériau non magnétique, et les bagues métalliques 44 sont en or.

Dans un souci de simplicité, on n'a pas décrit en détail, dans ce qui précède, les détecteurs 21, 22 et la carte électronique 58, qui appartiennent à l'art antérieur et sont connus de l'homme du métier. De façon succinte, on rappelle qu'un détecteur de champ magnétique 21, 22 est réalisé à partir d'un tube de céramique creux 70 à l'intérieur duquel est inséré un noyau magnétique, et autour duquel est enroulé un simple solénoïde 71 (fig. 4). L'excitation des détecteurs et la mesure du champ magnétique sont assurés par la carte électronique. On applique cycliquement aux détecteurs des créneaux de tension les amenant en état de saturation positive et négative. Le champ magnétique à mesurer modifie les conditions de saturation, qui sont analysées par un système électronique de détection présent sur la carte, et qui délivre des informations proportionnelles au champ magnétique.

Il apparaîtra clairement à l'homme du métier que la présente invention est susceptible de nombreuses variantes de réalisation et perfectionnements. De façon général, l'invention est applicable à la réalisation de tout type de capteur d'une grandeur physique orientée, comportant un support de détecteur pendulaire à un ou deux degrés de liberté. De même, ce capteur peut comprendre un seul, deux ou même trois détecteurs, si l'on souhaite mesurer les trois composantes spatiales de la grandeur physique.

## Revendications

1. Capteur (60), comprenant :
- un premier système pendulaire (30) articulé selon un premier axe (28), portant au moins un détecteur (21,22),
caractérisé en ce qu'il comprend en outre :
- un deuxième système pendulaire (40) articulé selon un deuxième axe (41) colinéaire audit premier axe (28), des bagues métalliques (44) de collecteur étant montées autour du deuxième axe, et
- des fils électriques (59) connectant des bornes du détecteur (21,22) auxdites bagues (44).

2. Capteur selon la revendication 1, caractérisé en ce les premier (28) et deuxième (41) axes sont liés en rotation par un système de couplage mécanique (49) présentant un jeu angulaire prédéterminé (θ), le jeu angulaire étant choisi de telle sorte que le premier système pendulaire est, au voisinage de sa position de repos, indépendant du deuxième système pendulaire.

3. Capteur selon le revendication 2, caractérisé en ce que ledit système de couplage (49) comprend :
- une pièce en forme de fourchette (46), fixée sur un prolongement (28-1) du premier axe (28),
- un doigt (47,48) solidaire du deuxième axe (41), logé entre des branches (46-1,46-2) de ladite fourchette et d'épaisseur sensiblement inférieure à la distance entre lesdites branches.

4. Capteur selon la revendication 3, caractérisé en ce qu'il est monté dans un boîtier (50) comprenant :
- une première cavité étanche (51), remplie d'un fluide visqueux, dans laquelle se trouve le premier système pendulaire (30),
- une deuxième cavité étanche (52), communiquant avec la première cavité, dans laquelle débouche ledit prolongement (28-1) du premier axe (28), et où se trouve ledit système de couplage (49),
- une troisième cavité (53) dans laquelle débouche, par l'intermédiaire d'un joint d'étanchéité (53-1), le deuxième axe (41), et où se trouve une carte électronique (58) connectée à des balais (45) frottant contre lesdites bagues métalliques (44).

5. Capteur selon l'une des revendications précédentes, caractérisé en ce que les premier (28) et deuxième (41) axes sont creux et traversés axialement par lesdits fils électriques (59).

6. Capteur selon l'une des revendications précédentes, caractérisé en ce que le premier système pendulaire (30) comprend :
- un cadre (27) solidaire dudit premier axe (28), et
- un support (23) du détecteur (21,22), solidaire d'un autre axe (25) porté par ledit cadre (27) perpendiculairement au premier axe (28).

## Patentansprüche

1. Sensor (60) der:
- ein erstes um eine erste Achse (28) schwenkbar gelagertes Pendelsystem (30) aufweist, das zumindest einen Detektor (21, 22) enthält, dadurch gekennzeichnet, dass er ferner:
- ein zweites Pendelsystem (40), das um eine zweite Achse (41) schwenkbar gelagert ist, die kollinear mit der ersten Achse (28) verläuft, wobei Metallschleifringe (44) um die zweite Achse angebracht sind, und - elektrische Leitungen (59) aufweist, die die Anschlüsse des Detektors (21, 22) mit den Ringen (44) verbinden.

2. Sensor nach Anspruch 1, dadurch gekennzeichnet, dass die erste (28) und die zweite (41) Achse durch eine mechanische Kopplungseinrichtung (49), die ein festgelegtes Winkelspiel (θ) aufweist, drehbar miteinander verbunden sind, und dass das Winkelspiel so gewählt ist, dass das erste Pendelsystem, in der Nähe seiner Ruhelage, von dem zweiten Pendelsystem unabhängig ist.

3. Sensor nach Anspruch 2, dadurch gekennzeichnet, dass die Kopplungseinrichtung (49):
- ein gabelförmiges Teil (46), das an einer Verlängerung (28-1) der ersten Achse (28) befestigt ist, und
- einen mit der zweiten Achse (41) fest verbundenen Finger (47, 48) aufweist, der zwischen Äste (46-1, 46-2) der Gabel eingelagert ist und dessen Dicke merklich kleiner als der Abstand zwischen den Ästen ist.

4. Sensor nach Anspruch 3, dadurch gekennzeichnet, dass er in ein Gehäuse (50) eingebaut ist, das folgende Merkmale aufweist:
- einen ersten dichten Hohlraum (51), der mit einer viskosen Flüssigkeit gefüllt ist und in dem sich das erste Pendelsystem (30) befindet,
- einen zweiten dichten Hohlraum (52), der mit dem ersten Hohlraum kommuniziert, in den die Verlängerung (28-1) der ersten Achse (28) einmündet und in dem sich die Kopplungseinrichtung (49) befindet,
- einen dritten dichten Hohlraum (53), in den die zweite Achse (41) durch eine dazwischen liegende Dichtung (53-1) einmündet und in dem sich eine Leiterplatte (58) befindet, die mit Schleifkontakten (45), die an die Metallringe (44) greifen, verbunden ist.

5. Sensor nach einem der vorhergehenden Ansprüche, dadurch gekennzeichnet, dass die erste (28) und die zweite (41) Achse hohl sind und axial von den elektrischen Leitungen (59) durchzogen sind.

6. Sensor nach einem der vorhergehenden Ansprüche, dadurch gekennzeichnet, dass das erste Pendelsystem (30):
- einen Rahmen (27), der fest mit der ersten Achse (28) verbunden ist, und
- eine Halterung (23) für den Detektor (21, 22) aufweist, die mit einer weiteren Achse (25) fest verbunden ist, die von dem Rahmen (27) senkrecht zu der ersten Achse (28) getragen ist.

## Claims

1. A sensor (60) including:
- a first pendular system (30) articulated along a first axis (28), bearing at least one detector (21, 22),
characterized in that it further comprises:
- a second pendular system (40) articulated along a second axis (41) collinear with said first axis (28), metal collector rings (44) being mounted around the second axis, and
- electrical wires (59) connecting the terminals of the detector (21, 22) to said rings (44).

2. The sensor of claim 1, characterized in that the rotation of the first (28) and second (41) axes is associated through a mechanic coupling device (49) having a predetermined angular clearance (θ), the angular clearance being selected so that the first pendular system is, near its quiescent position, independent from the second pendular system.

3. The sensor of claim 2, characterized in that said coupling device (49) includes;
- a fork-shaped part (46), fixed to an extension (28-1) of the first axis (28), and
- a finger (47, 48) integral with the second axis (41), placed between the branches (46-1, 46-2) of said fork, and having a thickness substantially smaller than the distance between said two branches.

4. The sensor of claim 3, characterized in that it is mounted in a casing (50) including:
- a first water-proof cavity (51) filled with a viscous liquid, in which is located the first pendular system (30),
- a second water-proof cavity (52), communicating with the first cavity, into which said extension (28-1) of the first axis (28) is accommodated, and in which is included said coupling device (49), and
- a third cavity (53) into which ends, through a sealing joint (53-1), the second axis (41), and in which is located an electronic card (58) connected to brushes (45) in friction against said metallic rings (44).

5. The sensor of any of the former claims, wherein the first (28) and second (41) axes are hollow and are axially crossed by said electrical wires (59).

6. The sensor of any of the former claims, wherein the first pendular system (30) includes:
- a frame (27) integral with said first axis (28), and
- a support (23) for supporting the detector (21, 22), integral with another axis (25) carried by said frame (27) perpendicularly to the first axis (28).
